# EUROPEAN PATENT APPLICATION

(11) **EP 3 597 974 A1**
(43) Date of publication of application: **22.01.2020**
(21) Application number: 18767263.9
(22) Date of filing: 09.03.2018
(51) Int. Cl.: F16L 11/08, B32B 1/08, B32B 25/10, B32B 25/16

(54) **BELT-SHAPED FABRIC FOR HOSE, AND HOSE**

(30) Priority: 14.03.2017 JP 2017048528
(71) Applicant: Bridgestone Corporation, Tokyo 104-8340 (JP)
(72) Inventor: KURODA Taisuke, Tokyo 104-8340 (JP); HASHIMOTO Masao, Tokyo 104-8340 (JP)
(74) Representative: Oxley, Robin John George
(86) International application number: PCT/JP2018/009168
(87) International publication number: WO 2018/168677

(57) **Abstract**

[Problem to be Solved]

To provide a belt-shaped fabric for hose and a hose capable of achieving an improvement in terms of workability during hose production.

[Solution]

When spirally winding a belt-shaped fabric 14 for covering around the outer periphery of an inner tube rubber 12, and covering the outer side thereof with wire 16 and rubber 18, at least a portion of the fiber forming the belt-shaped fabric 14 is covered with rubber cement 24, whereby weave deviation is not easily generated even when the belt-shaped fabric 14 is spirally wound for covering around the outer periphery of the inner tube rubber 12. In the case where the fiber of the belt-shaped fabric 14 is impregnated with a dip liquid, the dip liquid is not easily exposed to the oxygen in the air, so that it is possible to suppress deterioration of the dip liquid.

## Description

### Technical Field

The present invention relates to a belt-shaped fabric for hose and a hose such as a belt-shaped fabric for a high pressure hose through which a high pressure fluid is passed and a high pressure hose.

### Background Art

An example of this hose is disclosed in Patent Literature 1 mentioned below. In this hose, the outer side of an inner tube rubber is covered with a predetermined number of reinforcement layers, each wound spirally in an opposite direction and consisting of wire and rubber. The outermost side is covered with a jacket rubber. Further, in this hose, a belt-shaped fabric is spirally wound for covering between the innermost reinforcement layer (first reinforcement layer) and the inner tube rubber. The spiral direction of the belt-shaped fabric is opposite the spiral direction of the wire of the first reinforcement layer, and the thickness, longitudinal strength, and unit mass of the belt-shaped fabric are specified. According to the patent literature, by thus specifying the spiral direction of the belt-shaped fabric and various factors, it is possible to achieve an improvement in terms of the durability and pressure resistance of the hose.

### Prior Art Literature

### Patent Literature

Patent Literature 1: Japanese Patent Laid-Open No. 2005-147345

### Summary of Invention

### Technical Problem

The hose in which a belt-shaped fabric is spirally wound around the outer periphery of the inner tube rubber for covering and in which the outer side of the fabric is covered with reinforcement layers consisting of wire and rubber, however, there is room left for an improvement in terms of the workability of the production process. For example, to secure the requisite strength of the hoses, it is necessary to wind the belt-shaped fabric around the outer periphery of the inner tube rubber for covering while imparting tension to the belt-shaped fabric. At this time, there is a possibility of the weave of the belt-shaped fabric being deviated, resulting in an uneven fiber arrangement of the woven fabric. Further, in the case where the bonding property between the fiber constituting the belt-shaped fabric and the rubber covering the outer side thereof is rather unsatisfactory, it is sometimes necessary to impregnate the belt-shaped fabric with a dip liquid for achieving an improvement in terms of bonding property with respect to rubber. This dip liquid is subject to deterioration due to, for example, the oxygen in the air. Thus, care must be taken in controlling the belt-shaped fabric.

The present invention has been made in view of the above problems. It is an object of the present invention to provide a belt-shaped fabric for hose and a hose capable of achieving an improvement in terms of the workability during the production of the hose.

### Solution to Problem

To achieve the above object, there is provided in accordance with claim 1, a belt-shaped fabric for hose, to be spirally wound around an outer periphery of an inner tube rubber of a hose for covering, wherein an outer side of the fabric is to be covered with wire and rubber, and wherein at least a portion of fiber forming the fabric is covered with rubber cement.

In this structure, at least a portion of the fiber forming the fabric is fixed in position by the rubber cement, so that the weave is not easily deviated even if the fabric is spirally wound around the outer periphery of the inner tube rubber for covering. Further, in the case where the fiber of the fabric is impregnated with a dip liquid, the dip liquid is not easily exposed to the oxygen in the air due to covering with rubber cement, so that it is possible to suppress deterioration of the dip liquid. Thus, it is possible to achieve an improvement in terms of workability during hose production. More preferably, the entire fiber forming the fabric is covered with the rubber cement.

In accordance with claim 2, there is provided the belt-shaped fabric for hose according to claim 1, wherein the covering with the rubber cement is effected on the fiber impregnated with a dip liquid which enhances a bonding property with respect to rubber.

In this structure, the bonding property between the fiber forming the fabric and the rubber cement is satisfactory. Further, the dip liquid with which the fiber is impregnated is not easily exposed to the oxygen in the air, so that it is possible to suppress deterioration of the dip liquid. As a result, it is possible to achieve an improvement in terms of workability during hose production.

In accordance with claim 3, there is provided the belt-shaped fabric for hose according to claim 1 or 2, wherein the belt-shaped fabric for hose as covered with the rubber cement exhibits a weave porosity of 20 to 70%.

In this structure, the weave porosity in the state in which the fabric is covered with the rubber cement is 20% or more, so that even if the fabric is wound around the outer periphery of the inner tube rubber so as to overlap in a predetermined width, the rubber covering the outer side can reach the inner tube rubber. Further, the fabric as covered with the rubber cement exhibits a weave porosity of 70% or less, whereby it is possible to prevent the wire covering the outer side from being engaged in the inner tube rubber. Thus, it is possible to achieve an improvement in terms of workability during hose production. Here, it is to be assumed that the porosity at the stage where no rubber cement is applied to the fiber is 100%.

In accordance with claim 4, there is provided the belt-shaped fabric for hose according to any one of claims 1 to 3, wherein the rubber cement contains an NBR type rubber.

This structure is superior in bonding property with respect to the inner tube rubber, and is so much the superior in workability during hose production.

In accordance with claim 5, there is provided the belt-shaped fabric for hose according to any one of claims 1 to 4, wherein a cross portion of the fiber forming the fabric is covered with the rubber cement.

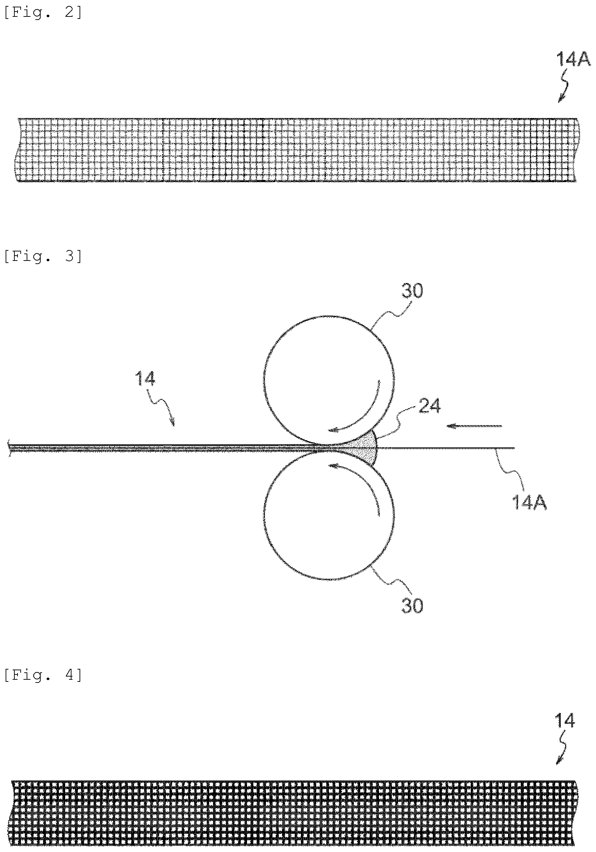

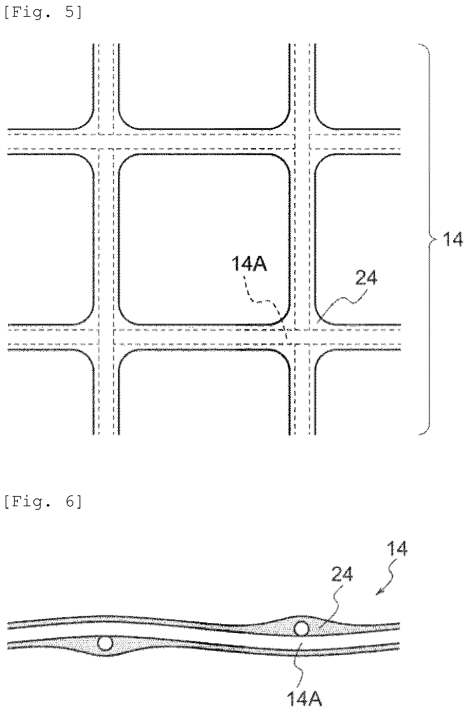

In this structure, in the case where there is a cross portion in the fiber, the bonding force is further enhanced when the rubber cement exists at this portion. Here, the term cross portion means a portion where fibers cross each other as shown in Figs. 4 and 5.

In accordance with claim 6, there is provided the belt-shaped fabric for hose according to any one of claims 1 to 5, wherein the belt-shaped fabric has a warp breaking elongation of 15 to 40%.

In this structure, the thread breakage frequency due to swaging/heating is low, so that it is possible to use the belt-shaped fabric in a stable manner.

In accordance with claim 7, there is provided the belt-shaped fabric for hose according to any one of claims 1 to 6, wherein the warp of the belt-shaped fabric has a thickness of 235 to 1670 dtex.

In this structure, the thread breakage frequency due to swaging/heating is low, so that it is possible to use the belt-shaped fabric for hose in a stable manner.

In accordance with claim 8, there is provided the belt-shaped fabric for hose according to any one of claims 1 to 7, wherein the belt-shaped fabric has a warp count of 20/50 mm to 50/50 mm.

In this structure, the thread breakage frequency due to swaging/heating is low, so that it is possible to use the belt-shaped fabric for hose in a stable manner.

In accordance with claim 9, there is provided the belt-shaped fabric for hose according to any one of claims 1 to 8, wherein the belt-shaped fabric has a weft count of 10/50 mm to 40/50 mm.

In this structure, the thread breakage frequency due to swaging/heating is low, so that it is possible to use the belt-shaped fabric for hose in a stable manner.

In accordance with claim 10, there is provided a hose using the belt-shaped fabric for hose according to any one of claims 1 to 9, wherein the belt-shaped fabric for hose is spirally wound around the outer periphery of the inner tube rubber for covering so as to overlap in a predetermined width; the outer side of the fabric is covered with the wire and rubber in a pre-set number of layers; and the outermost side thereof is covered with a jacket rubber.

In this structure, the belt-shaped fabric for hose is covered with the rubber cement, so that even when the belt-shaped fabric for hose is wound for covering so as to overlap, wrinkles are not easily generated, and tension control on the belt-shaped fabric for hose is easy to perform. Thus, the structure is superior in workability during hose production.

In accordance with claim 11, there is provided the hose according to claim 10, wherein the belt-shaped fabric for hose is wound around the outer periphery of the inner tube rubber at a winding angle of 45 to 70 degrees with respect to an axial direction of the hose.

In this structure, bulge (swelling), thread breakage due to swaging, and deviation of the weave of the belt-shaped fabric are not generated. Here, bulge is generated on the inner surface layer of the inner tube rubber. The deviation of the weave refers to a state in which the thread portion is dense as a result of the pore portion of the belt-shaped fabric being crushed.

In accordance with claim 12, there is provided the hose according to claim 10 or 11, wherein the belt-shaped fabric for hose is wound around the outer periphery of the inner tube rubber at a winding angle of 50 to 65 degrees with respect to the axial direction of the hose.

In this structure, bulge (swelling), thread breakage due to swaging, and deviation of the weave of the belt-shaped fabric are not generated.

### Advantageous Effects of Invention

As described above, in accordance with the present invention, at least a portion of the fiber forming at least the fabric is fixed in position by the rubber cement, so that even when the belt-shaped fabric for hose is spirally wound around the outer periphery of the inner tube rubber, the weave is not easily deviated. In the case where the fiber of the fabric is impregnated with a dip liquid, the dip liquid with which the fiber is impregnated is not easily exposed to the oxygen in the air, so that it is possible to suppress deterioration of the dip liquid. Due to these features, it is possible to achieve an improvement in terms of workability during hose production.

### Brief Description of Drawings

[Fig. 1] Fig. 1 is a schematic view illustrating a hose according to an embodiment using a belt-shaped fabric for hose of the present invention.
[Fig. 2] Fig. 2 is an explanatory view of a belt-shaped fabric for hose before it is covered with rubber cement.
[Fig. 3] Fig. 3 is an explanatory view of a belt-shaped fabric for hose as covered with rubber cement.
[Fig. 4] Fig. 4 is a diagram illustrating the belt-shaped fabric for hose of Fig. 3 in detail.
[Fig. 5] Fig. 5 is a sectional view of Fig. 4.
[Fig. 6] Fig. 6 is an explanatory view of a process of winding a belt-shaped fabric for hose around an inner tube rubber for covering.

### Description of Embodiments

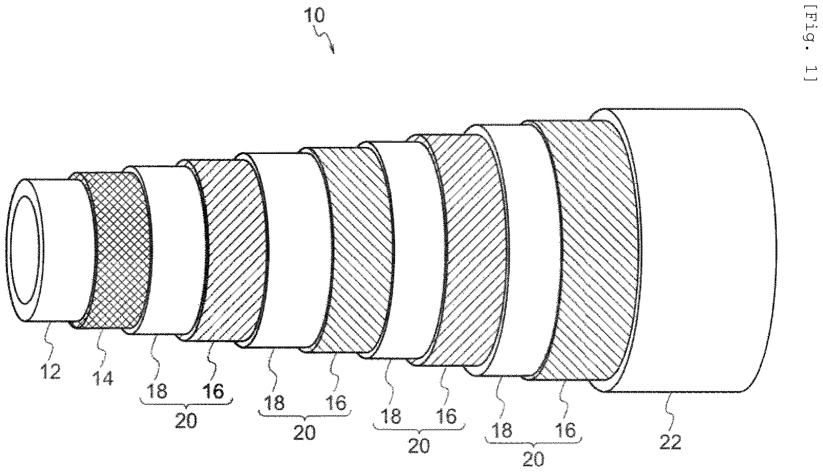

In the following, a belt-shaped fabric for hose and a hose according to an embodiment of the present invention will be described in detail with reference to the drawings. Fig. 1 is a schematic view illustrating a hose according to an embodiment using a belt-shaped fabric for hose of the present embodiment. A hose 10 is a so-called high pressure hose through which a high pressure fluid such as oil is passed. It is used, for example, in the hydraulic piping of a construction machine. This high pressure hose 10 is also referred to as a wire spiral hose. Apart from this use, the hose of the present invention can be used for all sorts of uses.

In this hose 10, a belt-shaped fabric for hose (hereinafter also referred to simply as a belt-shaped fabric) 14 is spirally wound for covering around the outer periphery of an inner tube rubber 12 through which a fluid is passed. A predetermined number of (four in this example) reinforcement layers 20 consisting of wire 16 and rubber 18 are spirally wound around the outer side thereof with each layer in an opposite direction for covering, and the outermost side thereof is covered with a jacket rubber 22. The rubber 18 of the reinforcement layer 20 is also referred to as an intermediate rubber. While the drawing shows a layer structure consisting of the intermediate rubber 18 alone, as is well-known in the art, this intermediate rubber 18 gets into the gaps of the wire 16 and into the weaves of the belt-shaped fabric 14, serving to effect bonding and fixation between the wires 16, between the wire 16 and the belt-shaped fabric 14, between the belt-shaped fabric 14 or the wire 16 and the inner tube rubber 12, and between the wire 16 and the jacket rubber 22. The wire is generally formed of steel (metal).

Various rubber material are used for the inner tube rubber 12 according to the fluid passed through the same. In the case, for example, where the fluid passed through it is oil, an oil resistant property is required, so that, for example, an NBR type rubber material is used. Other materials other than this can also be used. In the process of winding the belt-shaped fabric 14 and the wire 16 for covering, the inner tube rubber 12 is unvulcanized rubber, which is vulcanized after the winding process for covering. Examples of the rubber material forming the inner tube rubber layer include nitrile rubber (NBR), styrene butadiene rubber (SBR), butadiene rubber (BR), chloroprene rubber (CR), natural rubber (NR), and ethylene propiene diene rubber (EPDM). These may be combined as appropriate, and may be used singly in some cases. It is possible to add as appropriate to the above materials compounding agents such as processing aid usually used, antioxidant, vulcanizing agent, reinforcing agent, and vulcanization accelerator.

The belt-shaped fabric 14 is spirally wound around the outer periphery of the inner tube rubber 12 for covering, whereby it is possible to prevent the outer wire 16 from being engaged in the unvulcanized inner tube rubber 12. Since the wire 16 is not engaged in the inner tube rubber 12, the belt-shaped fabric 14 is wound around the outer periphery of the inner tube rubber 12 for covering in a state in which a predetermined tension is imparted thereto and so as to overlap each other in a pre-set overlapping state, that is, so as to overlap in a predetermined width. The belt-shaped fabric 14 will be described in detail below. It is a fabric, that is, a fabric consisting of warp and weft. As the fiber material, there is used, for example, aramid fiber or polyester fiber. In this embodiment, there is used a fabric of plain weave, which helps to easily obtain an elongated belt-shaped fabric 14.

The wire 16 of each reinforcement layer 20 is spirally wound for covering such that the spiral direction is opposite for each layer. The rubber 18 of the reinforcement layer 20, that is, the intermediate rubber, gets into the gaps of the wire 16 or the weave of the belt-shaped fabric 14, bonding and fixing them in position. Generally, the same rubber material is used for the intermediate rubber 18 of all the reinforcement layers 20. For example, a CR type rubber is used. The number of the reinforcement layers 20, that is, the number of wires wound for covering, is set in accordance with the strength required of the hose 10 and the thickness of the hose 10. The strength required of the hose 10 depends upon the pressure of the fluid passed therethrough. While in the figure shown the outer side of the belt-shaped fabric 14 is covered with the rubber 18, and the wire 16 is spirally wound for covering the outer side thereof, it is also possible, for example, to spirally wind the wire 16 on the outer side of the belt-shaped fabric 14 for covering, and cover the outer side thereof with the intermediate rubber 18. Examples of the rubber component forming the intermediate rubber layer include NBR, hydrogen added NBR (HNBR), SBR, BR, natural rubber (NR), and EPDM. These may be combined as appropriate, and may be used singly in some cases. It is possible to add as appropriate to the above materials compounding agents such as processing aid usually used, antioxidant, vulcanizing agent, reinforcing agent, and vulcanization accelerator. Instead of the wire 16, a chord (what is obtained by twisting together small diameter wires) may be used. In the case of a chord, again it is generally formed of steel (metal).

The jacket rubber 22 covers the outermost layer mainly to protect the hose 10 itself. Thus, for example, strength such as wear resistance and damage prevention property with respect to drag is required of it. Thus, for example, a CR rubber is used for the jacket rubber 22. Examples of the rubber component forming the jacket rubber layer include nitrile rubber (NBR), styrene butadiene rubber (SBR), butadiene rubber (BR), chloroprene rubber (CR), natural rubber (NR), and ethylene propiene diene rubber (EPDM). These may be combined as appropriate, and may be used singly in some cases. It is possible to add as appropriate to the above materials compounding agents such as processing aid usually used, antioxidant, vulcanizing agent, reinforcing agent, and vulcanization accelerator.

Fig. 2 is a front view of a belt-shaped fabric 14A in the material state, more specifically, the belt-shaped fabric 14A not covered with the rubber cement. As stated above, this belt-shaped fabric 14A in the material state is woven through plain weaving of warp and weft formed, for example, of polyamide fiber and polyester fiber mentioned above. Through plain weaving, an elongated belt-shaped fabric 14A in the material state can be easily obtained. The belt-shaped fabric 14A in the material state of this embodiment is obtained through plain weaving such that it exhibits a weave porosity of 20 to 70%, more preferably, 30 to 60% after the covering with rubber cement 24 mentioned below. As described below, this weave porosity is specified from the viewpoint that the intermediate rubber 18 can enter or that the wire 16 covering the outer side is not engaged in the inner tube rubber 12. Here, the rubber cement is a composition containing at least a rubber component and a solvent dissolving the rubber component and used for the bonding between rubber members or between a rubber member and a member containing a rubber component.

Recommended factors of the belt-shaped fabric 14A in the material state will be described. The elongation (breaking elongation) of the warp of this belt-shaped fabric 14A is set based on the evaluation of JIS L 1095 (general spun yarn testing method), and it is 15% or more, more preferably, 15 to 40%. In the case where the warp is nylon, a breaking elongation of approximately 28% is suitable. When the breaking elongation of the warp is less than 15%, the frequency of generation of thread breakage due to swaging/heating is rather high, and when the breaking elongation of the warp exceeds 40%, the product cannot be used as a belt-shaped fabric. The thickness of the warp of the belt-shaped fabric 14A is set based on the evaluation of JIS L 1095 (general spun yarn testing method), and is 235 to 1670 dtex, preferably 400 to 1100 dtex, in direct yarn count per 10000 m. When the thickness of the warp is less than 235 dtex, the frequency of generation of thread breakage due to swaging/heating is rather high, whereas when it exceeds 1670 dtex, the rigidity of the hose is so high that it is not greatly bent. The thread count of the belt-shaped fabric 14A is set based on the evaluation of JIS L 1096 (fabric and knitting texture testing method); and in thread count per 50 mm, the warp count is 20 to 50/50 mm, preferably 25 to 40/50 mm, and the weft count is 10 to 40/50 mm, preferably 15 to 30/50 mm. When the warp count is less than 20/50 mm, the frequency of generation of thread breakage due to swaging/heating is rather high, whereas when it exceeds 50/50 mm, the rigidity of the hose is so high that it is not greatly bent. When the weft count is less than 10/50 mm, the frequency of generation of thread breakage due to swaging/heating is rather high, whereas when it exceeds 40/50 mm, the rigidity of the hose is so high that it is not greatly bent.

As in the prior art, this belt-shaped fabric 14A in the material state is impregnated with a dip liquid (not shown) improving the bonding property with respect to rubber. In impregnating the belt-shaped fabric with the dip liquid, the belt-shaped fabric 14A in the material state is passed, for example, through a dip liquid vessel while conveying the belt-shaped fabric 14A in the longitudinal direction. For example, the rubber cement 24 is applied to the belt-shaped fabric 14A in the material state impregnated with the dip liquid to cover the fiber forming the fabric with the rubber cement 24. In covering the belt-shaped fabric 14A in the material state with the rubber cement 24, the belt-shaped fabric 14A in the material state impregnated with the dip liquid is fed, for example, between rollers 30 rotating while opposite each other. On the input side of the rollers, there is formed a sump for the rubber cement 24, and the rubber cement 24 adhering to the surface of the belt-shaped fabric 14A in the material state having passed through this rubber cement sump is uniformly spread by the rollers 30. The rubber cement 24 used is of, for example, unvulcanized rubber paste, which, from the viewpoint of bonding property with respect to the wire 16, preferably contains an NBR type rubber. For example, the covering thickness of the rubber cement 24 preferably ranges from 0.01 mm to 0.5 mm.

Fig. 3 is a front view of the belt-shaped fabric 14 covered with the rubber cement 24, Fig. 4 is a detailed view of the belt-shaped fabric 14 of Fig. 3, and Fig. 5 is a sectional view of Fig. 4. The inner side fiber of the rubber cement covering is impregnated with the dip liquid. Due to the covering with the rubber cement 24, the weave porosity of the belt-shaped fabric 14 in this state is so much the smaller than that of the belt-shaped fabric 14A in the material state. While in Fig. 5 the entire outer surface of the fiber forming the belt-shaped fabric 14 is covered with the rubber cement 24, it is not always necessary for the entire outer surface of the fiber to be covered with the rubber cement 24. As shown in Fig. 6, the belt-shaped fabric 14 the fiber of which is thus impregnated with the dip liquid and which is covered with the rubber cement 24 is spirally wound for covering around the outer periphery of the inner tube rubber 12 so as to overlap in a predetermined width. In this winding process for covering, a predetermined tension is preferably imparted to the belt-shaped fabric 14. By thus performing the winding for covering while imparting tension to the belt-shaped fabric 14, it is possible to prevent generation of looseness and wrinkles in the belt-shaped fabric 14.

In this embodiment, the rubber (intermediate rubber) 18 of the reinforcement layer 20 enters the belt-shaped fabrics 14 overlapped with each other to effect bonding/fixation between the belt-shaped fabric 14 and the inner tube rubber 12 or between the belt-shaped fabric 14 and the wire 16, so that the weave porosity of the belt-shaped fabric 14 in the state in which it is covered with the rubber cement 24 is important. The weave porosity of the fabric can be expressed by percentage by dividing the gap between the adjacent fibers, that is, the opening, by the fiber pitch, for example. In this case, it is expressed by percentage by dividing, for example, the gap between the adjacent rubber cement portions 24 by the fiber pitch. For example, when the weave porosity of the belt-shaped fabric 14 as covered with the rubber cement 24 is less than 20%, the texture of the belt-shaped fabrics 14 overlapped with each other is too close for the intermediate rubber 18 to enter. On the other hand, when the weave porosity of the belt-shaped fabric 14 as covered with the rubber cement 24 exceeds 70%, there is a possibility of the wire 16 covering the outer side being engaged in the inner tube rubber 12. In view of this, the weave porosity of the belt-shaped fabric 14 as covered with the rubber cement 24 is 20 to 70%, preferably, 30 to 60%.

In the conventional wire spiral hose production, the belt-shaped fabric 14A in the material state shown, for example, in Fig. 2 is impregnated with the dip liquid, and is wound for covering as it is around the outer periphery of the inner tube rubber 12 as shown in Fig. 6. However, in the belt-shaped fabric 14A in the material state, in particular, in the plain weave belt-shaped fabric 14A, the warp and weft of the fiber are not stable. When it is wound for covering in the state in which tension is imparted thereto, the fiber itself is deviated, resulting in so-called weave deviation. Further, in the belt-shaped fabric 14A in the material state, when it is wound for covering in an overlapping state as described above, slippage is likely to be generated at the overlapping portion, and wrinkles may be generated after the winding for covering. Further, when tension is imparted to the belt-shaped fabric 14A in the material state, the belt-shaped fabric 14A itself is elongated, thus making it difficult to control the tension at the time of production. As a result, the bonding property due to the intermediate rubber 18 at the overlapping portion of the belt-shaped fabrics 14A after the winding for covering cannot but deteriorate, and there is a possibility of generation of a local difference in bonding force. Further, in the case where in-process items are generated during the actual production, the dip liquid is exposed to the oxygen in the air to deteriorate, with result that the bonding force between the belt-shaped fabric 14A and the intermediate rubber 18 may be reduced.

In contrast, in the belt-shaped fabric 14 of Fig. 3 the outer surface of the fiber of which is covered with the rubber cement 24, when performing winding for covering while imparting tension thereto, there is no possibility of the fiber itself being deviated, nor is there any possibility of weave deviation. Further, when winding the belt-shaped fabrics 14 for covering so as to overlap them with each other, due to the frictional resistance of the rubber cement covering, slippage is not easily generated at the overlapping portion, and no wrinkles are generated after the winding for covering. Further, there is no possibility of the fiber being deviated due to the rubber cement covering, that is, the belt-shaped fabric 14 is not easily elongated, so that the tension control during production is easy to perform. As a result, the bonding property due to the intermediate rubber 18 at the overlapping portion of the belt-shaped fabrics 14 after the winding for covering is improved, making it possible to achieve a stable bonding force. Further, the fiber impregnated with the dip liquid is covered with the rubber cement 24, so that the dip liquid is not exposed to the oxygen in the air, making it possible to prevent deterioration of the dip liquid, whereby it is possible to secure the requisite bonding force between the belt-shaped fabric 14 and the inner tube rubber 12.

In order to suppress fiber deviation of the belt-shaped fabric 14A in the material state and to prevent generation of weave deviation, it is necessary for at least a portion of the fiber thereof, at least, to be covered with the rubber cement 24. Further, in order for the dip liquid with which the fiber of the belt-shaped fabric 14 is impregnated to be not easily exposed to the oxygen in the air, it is necessary for at least a portion of the fiber thereof to be covered with the rubber cement 24. That is, in the belt-shaped fabric 14 of this embodiment, it is necessary for at least a portion of the fiber forming the fabric to be covered with the rubber cement 24.

In this way, in the belt-shaped fabric for hose 14 of this embodiment, when spirally winding around the outer periphery of the inner tube rubber 12 for covering, and covering the outer side thereof with the wire 16 and the rubber 18, at least a portion of the fiber forming the belt-shaped fabric 14 is covered with the rubber cement 24, whereby weave deviation does not easily occur even when the belt-shaped fabric 14 is spirally wound around the outer periphery of the inner tube rubber 12 for covering. In the cases where the fiber of the belt-shaped fabric 14 is impregnated with the dip liquid, the dip liquid is not easily exposed to the oxygen in the air, so that it is possible to suppress deterioration of the dip liquid. Thus, by using the belt-shaped fabric 14 of this embodiment, it is possible to achieve an improvement in terms of workability during hose production.

Further, by impregnating the belt-shaped fabric 14A with the dip liquid improving the bonding property with respect to rubber, the bonding property for bonding between the rubber cement 24 and the fiber of the belt-shaped fabric 14A is made superior, and the dip liquid with which the fabric is impregnated is not easily exposed to the oxygen in the air, whereby it is possible to suppress deterioration of the dip liquid, with the result that it is possible to achieve an improvement in terms of workability during hose production.

Further, the weave porosity of the belt-shaped fabric 14 as covered with the rubber cement 24 is set to 20 to 70%, whereby even when the belt-shaped fabric 14 is wound for covering around the outer periphery of the inner tube rubber 12 in a state in which it is previously placed in an overlapping state, the intermediate rubber 18 covering the outer side can reach the inner tube rubber 12, and it is possible to reliably prevent the wire 16 from being engaged in the inner tube rubber 12. As a result, it is possible to achieve an improvement in terms of workability during hose production. While the belt-shaped fabric 14 as covered with the rubber cement 24 is also wound spirally, this should not be construed restrictively. For example, it is also possible to wind it in such a way as to wrap in something like a sheet.

Further, an NBR type rubber is used as the rubber cement 24, whereby the bonding property with respect to the rubber on the inner side is superior, and the workability during hose production is so much the more superior.

Further, by covering the fiber with the rubber cement 24, it is possible to eliminate the demerit of plain weaving, which, while allowing production of an elongated belt-shaped fabric 14A with the fiber thereof is formed through plain weaving of warp and weft, is subject to weave deviation.

Further, the belt-shaped fabric 14 as covered with the rubber cement 24 is spirally wound for covering around the outer periphery of the inner tube rubber 12 so as to overlap in a predetermined width, the outer side of the fabric is covered with the wire 16 and the intermediate rubber 18 in a pre-set number of layers, and the outermost side thereof is covered with the jacket rubber 22. Due to this hose structure, wrinkles and looseness are not easily generated, and the tension control of the belt-shaped fabric 14 is easy to perform, so that it is possible to achieve a superior workability during hose production and to secure the requisite strength of the hose produced.

Regarding the winding angle of the belt-shaped fabric 14, there is a more preferable winding angle. Table 1 below shows hose characteristics in correspondence with the presence/absence of rubber cement and the winding angle of the belt-shaped fabric with respect to the axial direction of the hose. If no rubber cement is applied, there is no problem regarding pressure resistance. There is, however, a possibility of weave deviation and deterioration of the dip liquid. When rubber cement is applied, however, such problems are substantially eliminated. The winding angle of the belt-shaped fabric with respect to the axial direction of the hose is 45 to 70 degrees, and more preferably 50 to 65 degrees. When the winding angle is less than 45 degrees, bulge and thread breakage due to swaging are rarely generated, and when the winding angle is larger than 70 degrees, weave deviation of the belt-shaped fabric is rarely generated.

**[Table 1]**

| Belt-shaped fabric | Spiral winding with cement 1 (Example 1) | Spiral winding with cement 2 (Example 2) | Spiral winding with cement 3 (Example 3) | Spiral winding with cement 4 (Example 4) | Spiral winding with no cement (Comparative Example 1) | Spiral winding with no cement (Comparative Example 2) | Spiral winding with no cement (Comparative Example 3) |
|---|---|---|---|---|---|---|---|
| Winding angle with respect to the axial direction of the hose | 65° | 50° | 75° | 40° | 50° | 40° | 65° |
| Presence/absence of bulge generation | Absent | Absent | Absent | Very rarely present | Rarely present | Rarely present | Rarely present |
| Presence/absence of thread breakage due to swaging | Absent | Absent | Absent | Very rarely present | Absent | Rarely present | Absent |
| Weave deviation | Absent | Absent | Very rarely present | Absent | Rarely present | Rarely present | Rarely present |
| Deterioration of dip liquid | Absent | Absent | Absent | Absent | Present | Present | Present |

It goes without saying that the present invention includes various embodiments, etc. not described above. Thus, the technical scope of the present invention is solely to be determined by the special technical feature as described in the appended claims regarded as appropriate from the above description.

### Reference Signs List

- 10: hose (high pressure hose, wire spiral hose)
- 12: inner tube rubber
- 14: belt-shaped fabric
- 16: wire
- 18: rubber (intermediate rubber)
- 20: reinforcement layer
- 22: jacket rubber
- 24: rubber cement

## Claims

1. A belt-shaped fabric for hose, for covering an outer periphery of an inner tube rubber of a hose, wherein an outer side of the fabric is to be covered with wire and rubber, and
wherein at least a portion of fiber forming the fabric is covered with rubber cement.

2. The belt-shaped fabric for hose according to claim 1, wherein the covering with the rubber cement is effected on the fiber impregnated with a dip liquid which enhances a bonding property with respect to rubber.

3. The belt-shaped fabric for hose according to claim 1 or 2, wherein the belt-shaped fabric for hose as covered with the rubber cement exhibits a weave porosity of 20 to 70%.

4. The belt-shaped fabric for hose according to any one of claims 1 to 3, wherein the rubber cement contains an NBR type rubber.

5. The belt-shaped fabric for hose according to any one of claims 1 to 4, wherein a cross portion of the fiber forming the fabric is covered with the rubber cement.

6. The belt-shaped fabric for hose according to any one of claims 1 to 5, wherein the belt-shaped fabric has a warp breaking elongation of 15 to 40%.

7. The belt-shaped fabric for hose according to any one of claims 1 to 6, wherein the warp of the belt-shaped fabric has a thickness of 235 to 1670 dtex.

8. The belt-shaped fabric for hose according to any one of claims 1 to 7, wherein the belt-shaped fabric has a warp count of 20/50 mm to 50/50 mm.

9. The belt-shaped fabric for hose according to any one of claims 1 to 8, wherein the belt-shaped fabric has a weft count of 10/50 mm to 40/50 mm.

10. A hose using the belt-shaped fabric for hose according to any one of claims 1 to 9, wherein the belt-shaped fabric for hose is spirally wound around the outer periphery of the inner tube rubber for covering so as to overlap in a predetermined width; the outer side of the fabric is covered with the wire and rubber in a pre-set number of layers; and the outermost side thereof is covered with a jacket rubber.

11. The hose according to claim 10, wherein the belt-shaped fabric for hose is wound around the outer periphery of the inner tube rubber at a winding angle of 45 to 70 degrees with respect to an axial direction of the hose.

12. The hose according to claim 10 or 11, wherein the belt-shaped fabric for hose is wound around the outer periphery of the inner tube rubber at a winding angle of 50 to 65 degrees with respect to the axial direction of the hose.
